# EUROPEAN PATENT APPLICATION

(11) **EP 1 155 617 A1**
(43) Date of publication of application: **21.11.2001**
(21) Application number: 00201745.7
(22) Date of filing: 17.05.2000
(51) Int. Cl.: A01N 63/00, A01N 43/60, A01G 31/00

(54) **Mineral wool plant substrate**

(71) Applicant: Rockwool International A/S, 2640 Hedehusene (DK)
(72) Inventor: Kuiper, Daan, 6011 ST Ell (NL); Lugtenberg, Egbertus, Johannes Josephus, 2317 NG Leiden (NL); Chin-A-Woeng, Thomas Fong Cheong, 3061 ET Rotterdam (NL); Bloemberg, Guido Vincent, 2235 SP Voorschoten (NL)
(74) Representative: De Hoop, Eric

(57) **Abstract**

The invention relates to a mineral wool plant substrate comprising a coherent matrix of mineral wool and bound to the matrix a biologically active additive or a microorganism producing said additive, which additive has a favourable effect on plants. The invention further relates to the use of a mineral wool plant substrate comprising a coherent matrix of mineral wool and bound to the matrix a microorganism producing a biologically active additive, in the growth of crops under specified conditions. Also disclosed is a process for producing the mineral wool plant substrate.

## Description

The present invention relates to a mineral wool plant substrate, more in particular to a mineral wool plant substrate comprising a foreign material or materials in order to improve the properties of the mineral wool substrate to realize Crop Protection and/or improve plant performance.

Mineral wool plant substrates for plant growth are well-known in the art and consist of a coherent matrix of mineral wool. This coherent matrix is formed by collecting a layer of mineral wool fibres provided with a curable binder, so that after curing the mineral wool fibres are substantially not displaceable relative to one another. If required for fast uptake of water this coherent matrix of mineral wool may be provided with a wetting agent.

Under mineral wool is to be understood glass wool, stone wool, rock wool, man made vitrous fibres, slag wool, and/or mixtures thereof.

The fibres may have an average diameter varying in between 1-10 µm. For rock wool the fibre diameter is on average about 4 µm.

The density of the coherent matrix of mineral wool may be between 10-200 kg/m³, in general in the range of 40-80 kg/m³.

Such a coherent matrix of mineral wool has a form retaining property, which is inherent due to the inorganic starting materials used. Furthermore, the water retaining capacity of these mineral wool plant substrates is very well controllable and predictable.

Growers when utilizing such mineral wool plant substrates will have to apply pesticides if disease symptoms have been observed. A problem is that continuous observations are necessary and that sometimes the application of pesticide is too late.

An object of the present invention is to provide an improved mineral wool plant substrate, which aims to overcome this problem.

According to the invention there is provided a mineral wool plant substrate according to claim 1.

The biologically active additive may be any substance having a favourable effect on plants by providing improved growth conditions or by combatting diseases caused by fungus, virusses, bacteria, nematodes and insects. The biologically active additive may be a natural or a synthetic substance.

The biologically active additive is preferably selected from the group consisting of antibiotics, plant growth promoters, and mixtures thereof, and more preferably a fungicide.

From the group of fungicidal substances which comprises a great variety of different species, the phenazines are particularly preferred. Many phenazine derivatives and their syntheses are known. Many phenazines have antibiotic activity, and especially antifungus activity. For example, phenazine-1-carboxamide (PCN) shows a strong growth inhibiting effect on many phytopathogenic fungi, including *Fusarium, Rhizoctonia, Pythium, Botrytis, Verticillium and Alternaria,* and on some bacteria, especially grampositive bacteria.

For example, phenazine-1-carboxamide efficiently controls tomato foot and root rot caused by *Fusarium oxysporum* f.sp. *radicis lycopersici.* Phenazine-1-carboxamide has a strong growth inhibiting effect in a wide pH range, tested between pH 3.1 and 7.0. PCN also efficiently controls post- and pre-emergence damping-off (e.g. of tomato) caused by Pythium.

In a further aspect of the invention the mineral wool plant substrate comprises bound to the mineral wool matrix a microorganism producing a biologically active additive as defined above.

In particular the microorganism is an antibiotic producing bacterium, preferably a fungicide producing bacterium. A plurality of bacterial species produces fungicidal substances. Illustrative examples are *Pseudomonas* spp., *Streptomyces* spp., *Microbispora* spp., *Brevibacterium* spp., *Streptosporangium* spp., *Sorangium* spp., etc. The fungicidal activity is due to the production of various compounds, including phenazine derivatives. Preferably a microorganism is selected which has good root colonisation properties and/or good mineral wool colonisation properties. The inventors have found that root colonisation and mineral wool colonisation play an important role in biocontrol, presumably by providing a delivery system for antifungal compounds. Moreover, a microorganism showing good root colonisation properties and/or good mineral wool colonisation properties will adhere and remain to the roots when plants are transferred to fresh substrates.
A microorganism which very efficiently controls fungus and bacteria diseases is *Pseudomonas chlororaphis* PCL1391. The fungicidal activity appears to be due to the production of various compounds of which phenazine-1-carboxamide is the most important one. P. *chlororaphis* strain PCL1391 has been deposited under No. CBS 102790 on 16 May 2000 at the Centraalbureau Schimmelcultures in Baarn, NL.

PCL1391 appeared to be an efficient colonizer of tomato roots and an excellent biocontrol strain in an *F. oxysporum*/tomato test system.

In a further aspect the inventors have found genetic modifications of *P. chlororaphis* PCL1391 which result in overproduction of phenazine-1-carboxamide. Accordingly, such genetically transformed *P.chlororaphis* PCL1391 are preferably used in the present invention.
a. Production of phenazine-1-carboxamide in *P. chlororaphis* PCL1391 is under control of quorum sensing, in which acyl homoserine lactones (AHLs) play an essential role as inducer molecules. The phenazine biosynthetic operon (*phz*) comprises various phenazine biosynthetic genes (*phzA*, *phzB,* etc.) and regulatory genes (*phzR* and *phzI*). It has been shown that multiple copies of the genes *phzR* and *phzI*, which results in an overproduction of AHLs, results in a 3-fold overproduction of phenazine-1-carboxamide. It is contemplated that also in general bacteria can be genetically modified such that they comprise multiple copies of genes *phzR* and *phzI* resulting in an overproduction of antibiotic.
b. Also a mutation in the *lexA* gene of PCL1391 results in overproduction of AHLs and causes a 10-fold overproduction of phenazine-1-carboxamide by PCL1391. The *lexA* gene of PCL1391 is a gene that is homologous to the *lexA* gene of *P. aeruginosa.* The inventors are the first who have found that LexA is involved in regulation of antibiotic production.

When using the substrate of the invention wherein *P. chlororaphis* PCL1391 is bound to the mineral wool matrix, the production of PCN can be increased by employing the following conditions:
- growth under low oxygen,
- the presence of glycerol, fructose, ribose or citric acid in the nutrient medium, and
- the presence of various minerals (Cu²⁺, Zn²⁺, Fe³⁺) in the nutrient medium.

Evidently, these factors increase the expression of the PCN biosynthetic genes.

This invention also contemplates the overproduction of phenazine derivatives by employing a combination of two or more of the above measures, i.e. multiple copies of the genes *phzR* and *phzI,* mutation in the *lexA* gene, and nutrient medium conditions.

Mineral wool plant substrates are generally produced by curing mineral wool fibres provided with a curable binder. The mineral wool plant substrate of the invention can be produced by various methods. The biologically active additive or the microorganism producing said additive can be added either directly during production of the mineral wool substrate or to the finished (shaped) mineral wool substrate. When the additive or the microorganism can withstand the increased temperature during curing, it is preferred to add the additive or the microroganism directly during production. Accordingly, in a further aspect there is provided a process for producing a mineral wool plant substrate of the invention, wherein the additive or the microorganism producing said additive is admixed to mineral wool fibres and a curable binder to form a mixture, and said mixture is cured to form a coherent matrix.

In another embodiment the microorganism(s) can be added to the finished (cured) mineral wool plant substrate. In this embodiment it is preferred to have a good habitat for the microorganisms. A good habitat for micro-organisms is available in materials containing pores with an average size of 6 µm or less. Very good conditions are provided when the pores are smaller than 3 times the size of the micro-organisms, yet still larger than the organisms. Clay (such as Bentonite) is an example of a material containing an average pore size < 6 µm. The porosity and average pore size of clay is not static but fluctuates considerably due to the swell and shrink behaviour of clay, which is influenced, amongst other things by the pH-level, EC-level and water content.

### Experimental procedures

### Micro-organisms and media

The bacterial strains and plasmids used are listed in Table 1. King's medium B (KB) (King et al. 1954) was used for routinely culturing of *Pseudomonas* strains. *E. coli* and the *Chromobacterium violaceum* were grown in Luria-Bertani (LB) medium (Sambrook et al. 1989). *Agrobacterium tumefaciens* was grown on YMB medium (Smit et al. 1987). Solid growth media contained 1.8% agar (Difco Laboratories, Detroit, MI, USA). Kanamycin (50 µg/ml), tetracycline (80 µg/ml), chloramphenicol (20 µg/ml), and carbenicillin (50 µg/ml) were added for antibiotic selection where applicable.

### DNA modifications

Digestions with restriction endonucleases, ligation, and transformation of *E*. *coli* cells with plasmid DNA were performed using standard molecular biological protocols (Sambrook et al. 1989). Nucleotide sequencing was performed by Eurogentec B.V. (Herstal, Belgium) using AB1377-based fluorescent sequencing technology. Computer analysis of protein and nucleotide sequences was achieved with the Wisconsin Package version 10.0 (Genetics Computer Group (GCG), Madison, WI, USA).

### Bioassays for autoinducer activity

For detection of autoinducer activity with the *Chromobacterium violaceum N*-AHL reporter assay (Milton et al. 1997), overnight cultures of *Chromobacterium* were grown in LB medium supplemented with kanamycin (50 µg/ml). LB agar plates were overlaid with a 0.8% LB top agar layer mixed with a 16-h culture of the *Chromobacterium* CV026 indicator strain (200 µl/ml) (McClean et al. 1997). A volume of 20 µl of a 100 µl HPLC sample was tested for autoinducer activity in wells punched into the agar. The activity of fractions was judged after 16 h of growth at 28°C by the appearance of a violet halo around the well caused by violascein production as a result of activation of the reporter genes in the *Chromobacterium* strain. Autoinducer activity on C18 thin layer chromatography (TLC) (Merck, Darmstadt, Germany), developed in methanol-water (60/40, vol/vol), was detected by overlaying the TLC plate with a 0.8% LB top agar layer containing CV026 cells as described above, followed by incubation at 28°C for 16 h and analysed for the appearance of violet spots.

Autoinducer indicator assays based on the *Photobacterium* (*lux*) system using plasmid pSB401 (Winson et al. 1998) and the *P. aeruginosa* elastase (*las*) system using plasmid pSB1142 (T. Perehinec, Division of Food Sciences, Univ. of Nottingham, pers. comm.) were conducted similarly to the assay described above for *Chromobacterium.* A volume of 50 µl of a 16-h culture of DH5α[pSB401] or DH5α[pSB1142] was mixed with 3.0 ml 0.8% LB top agar and poured onto LB agar plates containing chloramphenicol (20 µg/ml). A volume of 20 µl of a sample was placed in the wells and the plates were incubated for 16 h at 28°C. Luminescence was detected by placing a photographic film (Fuji RX, Tokyo, Japan) against the bottom of the assay plates.

The induction of the *Agrobacterium tra* system was detected using *A. tumefaciens* strain NT1 harbouring plasmid pJM749 containing a *lacZ* reporter fused to a *tra* gene the expression of which is dependent on TraR (located on plasmid pSVB33) and the presence of a sufficient concentration of an autoinducer (Piper et al. 1993). *Agrobacterium* was scraped from YMB plates three days after streaking and resuspended in sterile water to an optical density (OD₆₂₀) of 0.1. A volume of 100 µl of the bacterial suspension was mixed with 3.0 ml of top agar and poured onto YMB plates containing 5-bromo-4-chloro-3-indolyl-β-galactopyranoside (X-Gal) to detect expression as blue pigmentation. Samples were tested as described above for the *Chromobacterium* bioassay. Blue zones were visible after 24-48 h of incubation at 28°C.

### Purification of autoinducers

For the isolation of autoinducer activity, three volumes of dichloromethane were added to seven volumes of supernatant of a 72-h KB culture of PCL1119 and shaken for one hour (120 rpm) Following extraction, the organic phase was removed and dried by evaporation in vacuo (McClean et al. 1997). Crude supernatant extracts were redissolved in 100 µl 100% acetonitrile and fractionated using either C18 TLC or high performance liquid chromatography (HPLC). C18-TLC plates (Merck, Darmstadt, Germany) were developed in a solvent mixture of methanol-water (60:40, vol/vol). After development, the plates were dried and overlaid with a top agar layer containing one of the indicator strains and incubated for 16 h at 28°C. HPLC was performed using an Alltech Hypersil ODS 5 µm 250 x 4.6 mm column (Alltech Associates, Inc, Deerfield, IL, USA) and a linear 20 to 90% (vol/vol) gradient of acetonitrile in water and a flow rate of 1 ml/min. After selecting active fractions, samples were pooled and reapplied to the column and eluting with an isocratic gradient of 35% acetonitrile. UV detection was performed using a Pharmacia RSD 2140 diode array detector (Pharmacia, Uppsala, Sweden) with wave-length scanning from 190 to 400 nm, and 1.0 ml fractions were collected and analysed for the presence of autoinducer activity using the *Chromobacterium* biosensor. Finally, active fractions were pooled for mass spectrometry analyses.

### Nanoelectrospray quadrupole time-of-flight mass spectrometric analysis

Electrospray collision-induced dissociation tandem mass spectra were obtained on a Micromass Q-TOF hybrid quadrupole Time-of-Flight tandem mass spectrometer (Wythenshawe, (UK)) equipped with a Z-Spray sample introduction system in a nanoflow electrospray ion source. The mass spectrometer was operated in the positive ion mode. The cone voltage was set at approximately 25 V and a capillary voltage of 1.5 kV was used. Argon was used as the collision gas and the spectra were obtained using a collision energy of 10 eV. Spectra were acquired via the Tof analyzer and were integrated every 2.4 seconds over the *m/z* 35-250 range. Data were recorded and processed using the MassLynx software, version 3.1. Mass calibration was performed by multiple ion monitoring of singly-charged sodium and caesium iodide signals. The samples were dissolved in 10 µl methanol, 3 µl of which were loaded into the nanospray gold coated glass capillary for sample delivery.

### Isolation of mutants impaired in PCN biosynthesis

A mutant library of PCL1391 consisting of 18,000 transposants was established using pRL1063a (Wolk et al. 1991), harbouring a Tn5-transposon carrying promoterless *luxAB* reporter genes. Mutants were selected for absence of, or change in, pigment production either on LB agar plates or in 200 µl liquid KB cultures grown in 96-well microtiter plates for three days. Phenotypic characterisation of the mutants for production of PCN, hydrogen cyanide, chitinase or protease, for motility (Chin-A-Woeng et al. 1998), and for tomato root colonising ability (Simons et al. 1996) was performed as previously described.

Since the Tn*5* transposon in the transconjugants contains an origin of replication that functions in *E. coli* (Wolk et al. 1991), chromosomal DNA regions flanking the transposon were recovered from the genome by excision with *Eco*RI, followed by circularisation, transfer to *E. coli,* and analysis by nucleotide sequencing. Nucleotide sequencing of the flanking regions was performed using unique primers oMP458 (5' TACTAGATTCAATGCTATCAATGAG 3') and oMP459 (5' AGGAGGTCACATGGAATATCAGAT 3') directed to the left and right ends of the Tn5 transposon, respectively.

### Isolation and identification of luxI and luxR homologues

A plasmid library of chromosomal fragments of strain PCL1391 was constructed by cloning chromosomal DNA digested with *Eco*RI into the multicloning site of pBluescript (Stratagene, La Jolla, CA, USA). After electroporation of this fragment library to an *E. coli lux* reporter strain containing pSB401 and overnight growth on LB agar plates, clones that induced the luciferase reporter were identified using a photographic film. To cure the *E. coli* strain from the pSB401 reporter construct, chloramphenicol selection was omitted while carbenicillin selection was maintained. The nucleotide sequence of the chromosomal insert in the remaining plasmid was determined using standard primers, e.g. the universal and -40 reverse primer, flanking the multiple cloning site of pBluescript.

### Expression of bioluminescent Tn5luxAB reporter strains

Expression of Tn*5luxAB*-tagged genes was determined by quantification of bioluminescence during culturing. Cells from overnight cultures were washed with fresh medium and diluted to an optical density (OD₆₂₀) of 0.1. Cultures were grown in LB medium in a volume of 10 ml under vigorous shaking. Growth was followed by measurement of optical density (OD₆₂₀) at regular intervals and 100 µl samples were taken in triplicate to quantify luminescence. A volume of 100 µl of an *n*-decyl-aldehyde substrate solution [0.2% *n*-decyl-aldehyde (Sigma, St. Louis, MO, USA) in a 2.0% bovine serum albumin (BSA) solution] was added. After thorough mixing, bioluminescence was determined using a luminescence counter (MicroBeta 1450 TriLux, Wallac, Turku, Finland).

The synthetic *N*-AHL molecules *N*-butanoyl-L-homoserine lactone (BHL), *N*-hexanoyl-L-homoserine lactone (HHL), *N*-octanoyl-L-homoserine lactone (OHL), *N*-decanoyl-L-homoserine lactone (DHL), *N*-dodecanoyl-L-homoserine lactone (dDHL), *N*-oxo-hexanoyl-L-homoserine lactone (OHHL), *N*-oxo-octanoyl-L-homoserine lactone (OOHL), and *N*-oxo-decanoyl-L-homoserine lactone (ODHL) (kindly provided by P. Williams, University of Nottingham) were tested for the ability to induce Tn*5luxAB* reporter strains. Cells were grown overnight in LB medium, washed, and resuspended to a cell density of 0.1 at OD₆₂₀ in fresh medium supplemented with either synthetic *N*-AHL(s) (5 µM) or spent growth supernatant (10% vol/vol) and grown to stationary phase. Luminescence was determined after every 0.1 unit increase of OD₆₂₀ and compared to that of the control without added *N*-AHL.

### Construction of gacS mutants

Site-directed mutagenesis in the *gacS* homologous gene was performed using pMP6014, a pIC20R suicide construct containing a 0.3 kb internal PCR-fragment of the *gacS*-homologous gene of strain PCL1391 and a tetracycline resistance cassette. The PCR primers contained *Kpn*I and *Eco*RI (underlined) restriction sites and annealed to nucleotide positions 1084 to 1103 (5'CCGGAATTCGAGCCACGAAATCCGTACCC 3') and 1294 to 1313 (5' CGGGGTACCTCAGGGTGTCCTGCAACAGG 3') of the *gacS* homologous gene of strain PCL1391. The construct was transformed to strain PCL1391 and its derivatives by electroporation and resistant colonies resulting from chromosomal integration were selected on LB agar medium supplemented with tetracycline (160 µg/ml) for PCL1391 or kanamycin (50 *µ*g/ml) and tetracycline for derivatives. Transformants were analysed for correct recombination using Southern hybridisation. The effect of a mutation in the *gacS* gene on the expression of genes was determined by quantifying bioluminescence of the *luxAB-*reporter during culture in KB-medium supplemented with 100 µM FeCl₃.

### Construction of lexA mutants

A similar mutagenesis strategy as described above was used for the introduction of a mutation in the *lexA* homologous gene. The *lexA* fragment for constructing the suicide plasmid pMP6015 was obtained by PCR using primers oMP506 (5'CCCAAGCTTCCGCCTGACAAACACTTG3') and oMP507 (5'CCCAAGCTTATTTCGATCGCGCCCTTG3') of the *lexA* homologous gene of strain PCL1391.

### Micro-organisms and media

King's medium B (KB) (King et al. 1954) was used routinely for culturing *Pseudomonas* strains. Media were solidified with 1.8% agar (Difco Laboratories, Detroit, MI) when necessary. Kanamycin (50 µg/ml) was added for antibiotic selection where applicable. The expression of the PCN biosynthetic genes was determined in Vogel-Bonner defined medium (Smit et al. 1987) and KB medium.

### In vitro expression of Tn5luxAB reporter strains

Expression of the Tn*5luxAB*-tagged gene was determined by quantification of bioluminescence during growth in liquid cultures. Cells from overnight cultures pre-grown in the tested medium were washed with fresh medium and diluted to an optical density (OD₆₂₀) of 0.1. Cultures were grown in a volume of 10 ml under vigorous aeration. Growth was followed by measurement of optical density (OD₆₂₀) at regular time intervals and 100 µl samples were taken in triplicate to quantify luminescence. A volume of 100 µl of a 0.2% *n*-decyl-aldehyde (Sigma, St. Louis, MO) in 2.0% bovine serum albumin (BSA) solution was added as the substrate to the sample. After thorough mixing bioluminescence was determined using a luminescence counter (MicroBeta 1450 TriLux, Wallac, Turku, Finland).

To test the influence of root exudate components, malic acid, L-pyroglutamic acid, fumaric acid, citric acid, propionic acid, oxalic acid, succinic acid, glucose, ribose, xylose, sucrose, fructose, or maltose were individudually used in a final concentration of 2 µM as a carbon source in Vogel-Bonner medium. The medium was supplemented with 1.0% proteose peptone since otherwise neither the PCL1119 *phzB*::Tn*5luxAB* reporter strain nor the parental wild-type strain PCL1391 could reach an OD₆₂₀ of 1.0 in minimal medium. Growth in 1.0% proteose peptone was used as a control.

The expression of the PCN biosynthetic genes under the influence of metal ions was quantified in Vogel-Bonner medium with glucose as a sole carbon source containing 100 µM FeCl₃, thiamine (2 mg/L), and biotin (2 mg/L). Standard Vogel-Bonner medium contains ZnSO₄ (5 µM), CuSO₄ (2 µM), MnSO₄ (30 µM), and NaMoO₄·H₂O (20 µM). To determine the influence of the presence of single metal ions on *phzB* expression, individual ions were either omitted or added in a tenfold (Cu²⁺, Mn²⁺, Zn²⁺, MoO₄⁻) or hundredfold (Fe³⁺) higher concentration.

To test the influence of a low oxygen tension, strains were grown in 40 ml KB medium in closed glass tubes under a continuous flow-through of 1.0% oxygen and 99% nitrogen, as described by Camacho *et al.* (submitted,) or in normal air as a control. Bioluminescence was measured as described above.

### Results

### Purification and identification of autoinducers produced by P. chororaphis

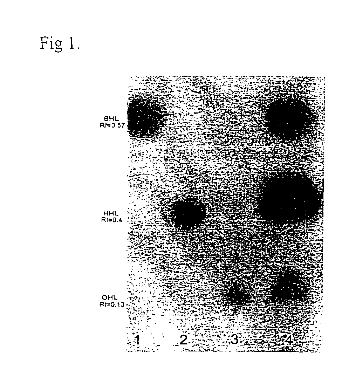

Production of PCN in *P. chlororaphis* strain PCL1391 (Table 1) appeared to be cell density dependent and therefore likely to be subject to quorum sensing (Chin-A-Woeng *et al*., submitted). To analyse the production of autoinducer(s) by strain PCL1391, a crude dichloromethane extract of spent culture medium of a 72-hour culture of strain PCL1119 (*phzB*::Tn*5luxAB*) (Chin-A-Woeng et al. 1998) was used. Strain PCL1119, a PCL1391 derivative unable to produce PCN due to a mutation in the biosynthetic *phzB* gene (Chin-A-Woeng et al. 1998), was used for autoinducer purification to overcome the problem of copurification of PCN and autoinducer(s) in the wild-type strain. PCL1119 was not changed in its autoinducer production in comparison with the wild-type strain. Extracts of the culture supernatatns of strain PCL1119 were tested for induction of a number of quorum sensing reporter systems including those for *Chromobacterium violaceum* pigmentation (McClean et al. 1997), *Photobacterium fisheri* luminescence (*lux*) (Stevens and Greenberg 1997), *Pseudomonas aeruginosa* elastase (*las*) (Pearson et al. 1997) and *Agrobacterium tumefaciens* conjugation (*tra*) (Hwang et al. 1995). After separation using C18 thin layer chromatography (TLC), three spots were detected in the *Chromobacterium* overlay system, (Fig. 1, lane 4). One major spot with R_{f} value 0.4 migrated to the same position as synthetic HHL (Fig. 1, lane 2). When a large quantity of sample was applied to the TLC-plate, a second spot with an R_{f} value of 0.57 was detected which migrated to the same position as synthetic BHL (Fig. 1, lane 1). A third spot with R_{f} value 0.13 was found to comigrate with synthetic OHL (Fig. 1, lane 3). Extracts of spent culture supernatant were also able to induce the *lux*-system, whereas they induced only weak signals in the *las-* and *tra*-systems (data not shown). None of the reporter systems was induced by dichloromethane extracts of uninoculated KB or LB growth medium.

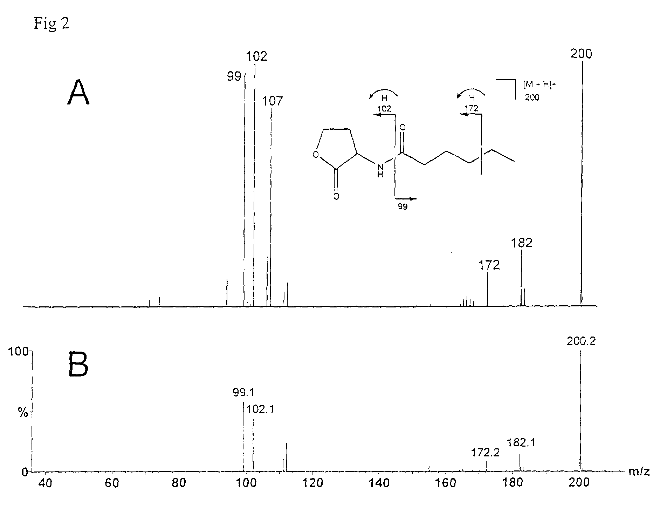

The compound migrating with R_{f} value 0.4 was purified using HPLC and analysed using positive ion mode nanoelectrospray collision induced dissociation (CID) tandem mass spectrometry on a hybrid quadrupole time-of-flight mass spectrometer, which allows exceptional sensitivity in the tandem mode. Instrument conditions were optimised using a solution of standard HHL (1.3 ng/µl), having a concentration approximately one tenth of that necessary to give a response in the bioassay similar to that of the fraction isolated from strain PCL1391. Following optimisation, a CID spectrum, in which fragmentation is induced on collision with a positive pressure of argon, of the standard was recorded (Fig. 2A). The needle containing the standard was then discarded. A CID spectrum was then recorded of the same precursor ion mass but introducing solvent only, in order to be certain that no contamination of the instrument had occurred with the standard and to identify any background signals arising from the solvent. No ions corresponding to HHL were observed in this blank spectrum, although an ion at *m/z* 107, also observed in the HHL spectrum, was present. The bioactive fraction was then introduced into the mass spectrometer in a fresh needle, and a mass spectrum was recorded. Very weak pseudomolecular ions were observed at *m/z* 200 (M+H⁺) and 222 (M+Na⁺) for a species with a molecular mass corresponding to HHL. These ions were barely discernible above the background. However, a CID spectrum of the M+H⁺ ion at *m/z* 200 was recorded, and generated a spectrum of good quality (Fig. 2B) which is very similar to that obtained from the standard HHL (Fig. 2A). Fragment ions characteristic of HHL were observed at *m/z* 99, 102, 172, and 182 (Fig. 2A inset). The ions at *m/z* 99 and 102 are generated on fragmentation of the amide bond between the hexanoyl moiety and the homoserine lactone, with the ion at *m/z* 99 corresponding to the hexanoyl substituent and that at *m/z* 102 being characteristic of the homoserine lactone. The ions at *m/z* 172 and 182 arise by the loss of small neutrals (*m/z* 172 = M+H⁺-C₂H₄; *m/z* 182 = M+H⁺-H₂O). These results demonstrate clearly that the component in the major bioactive fraction is *N*-hexanoyl-L-homoserine lactone (HHL).

In dichloromethane extracts of spent culture supernatant the other two activities were present in small amounts and were not sufficient for mass spectrometric analyses and are thus tentatively assigned as *N*-butanoyl-L-homoserine lactone (BHL) and *N*-octanoyl-L-homoserine lactone (OHL) based upon their TLC migration behavior and their biological activities in the *lux-, las-,* and *tra*-reporter systems.

### Isolation and characterisation of mutants affected in PCN biosynthesis

Screening of 18,000 Tn*5luxAB* PCL1391 transconjugants on agar plates and in liquid cultures resulted in the isolation of eight mutants altered in PCN production as judged by their altered pigmentation. Four mutants were identified of which the transposon was not inserted in a PCN biosynthetic gene. The regions flanking the Tn*5* insertion in the four mutants, PCL1103 (*phzI*::Tn*5luxAB*), PCL1104 (*phzR*::Tn*5luxAB*), PCL1123 (*gacS*::Tn*5luxAB*), and PCL1111 (*lexA*::Tn*5luxAB*) were recovered in the plasmids pMP6003, pMP6004, pMP6006, and pMP6005, respectively. Nucleotide sequence analyses of the flanking regions showed that the transposons in these mutants were inserted in homologues of *luxI, luxR, gacS,* and *lexA* genes, respectively.

### Characterisation of phzl and phzR mutants

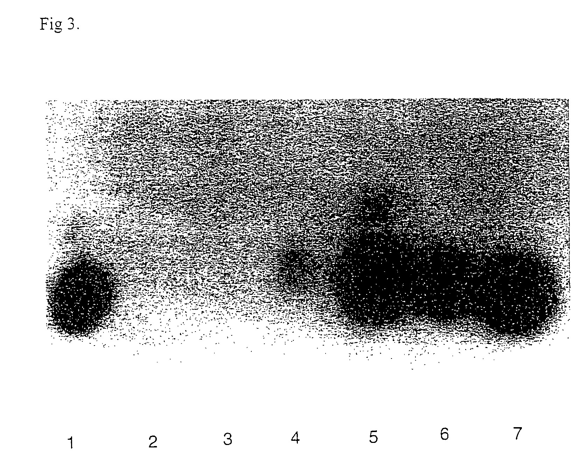

The production of PCN by these strains was determined using TLC and HPLC after extraction of culture supernatants with toluene. PCN was not detected in the toluene extracts of PCL1103 (*phzI*::Tn*5luxAB*) and PCL1104 (*phzR*::Tn*5luxAB*) (data not shown), nor were any autoinducers detected in dichloromethane extracts of these strains (Fig. 3). PCN production in the *phzI* mutant, but not in the *phzR* mutant, was restored by addition of either spent growth medium from PCL1119 (*phzB*::Tn*5luxAB*) or synthetic HHL (data not shown). The *phzI* and *phzR* mutants were not altered in the production of HCN, protease, or chitinase (Table 2). Neither mutant was impaired in motility or their ability to colonise in competition with the parental strain the tomato rhizosphere as assayed in competition with a *lacZ*-tagged derivative of the wild type strain PCL1391 (data not shown). Strains PCL1103 (*phzI*::Tn*5luxAB*) and PCL1104 (*phzR*::Tn*5luxAB*) were not able to inhibit growth of *F. oxysporum* f.sp. *radicis-lycopersici* as was shown with an in vitro antifungal assay (data not shown), which is consistent with the observed lack of PCN production.

### Isolation and characterisation of luxI and luxR homologues of strain PCL1391

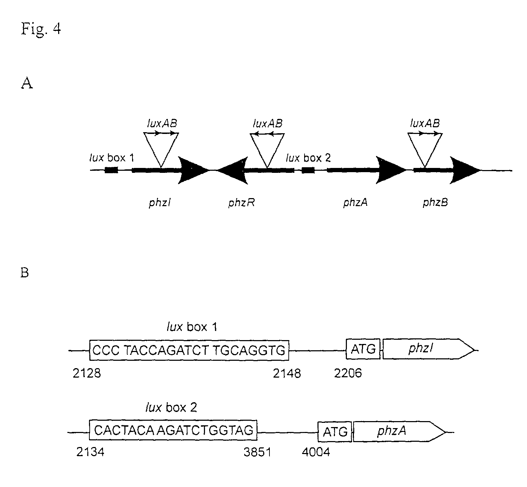

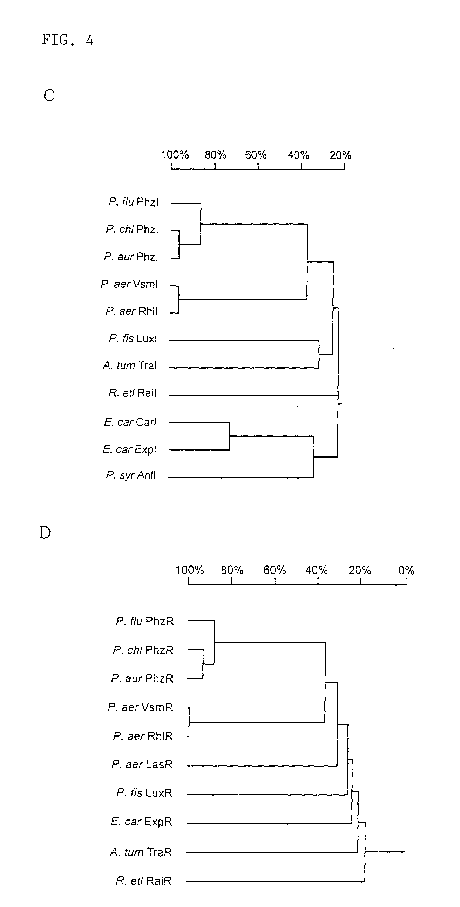

To isolate a PCL1391 chromosomal fragment containing *luxI* and *luxR* homologues, an *Eco*RI chromosomal library was transformed to DH5α harbouring pSB401, an *N*-AHL dependent reporter construct based upon the *Photobacterium lux*-system (McClean et al. 1997). Plasmid pMP6007 appeared to induce the reporter and contained a 4.5 kb chromosomal fragment of PCL1391. Partial sequencing of this clone revealed the complete *phzI* and *phzR* genes and the start of *phzA* (Fig. 4), the first gene of the PCN biosynthetic cluster (Chapter 4).

*E. coli* strains harbouring pMP6007 induced the DH5α[pSB401] and *Chromobacterium* CV026 reporter strain when streaked in the vicinity of the reporter, indicating the production of a diffusible *N*-AHL. To test whether *phzI* and *phzR* are responsible for synthesis of HHL, culture supernatants of *E. coli* DH5α with and without pMP6007 were extracted with dichloromethane and subjected to TLC analysis. Autoinducer activities with R_{f} values identical to those from the wild type PCL1391 culture supernatants were only detected in strains harboring pMP6007, whereas no activity was detected in the DH5α control (data not shown).

To transfer the *phzI* and *phzR* genes to PCL1391 mutant derivatives, plasmid pMP6008 was constructed by transfer of the 4.5 kb *Eco*RI chromosomal fragment containing the *phzI* and *phzR* genes of strain PCL1391 from pMP6007 to pME6010, a shuttle vector stably maintained in *Pseudomonas* species (Heeb et al. 2000). After introduction of pMP6008 into strains PCL1103 (*phzI*::Tn*5luxAB*) and PCL1104 (*phzR*::Tn*5luxAB*), PCN production was restored in both mutants as demonstrated on TLC analysis of culture supernatants (data not shown). This and the mutant studies described previously show that PhzI and PhzR are involved in the synthesis of the autoinducers BHL, HHL, and OHL.

Sequence analysis of the ORFs shows that the *phzI* and *phzR* genes are oppositely transcribed, with *phzI* being transcribed in the same direction as the *phz* biosynthetic operon (Fig. 4A). In the promoter regions of the *phzI* and *phzA* genes, sequences were identified that are homologous to the *lux*-box in *Photobacterium fisheri,* constituting a putative binding region for the transcriptional activator *luxR* (Fig. 4B).

The *phzl-* and *phzR*-homologous genes of PCL1391 were most homologous (85 to 95%) with other *phzI* (Fig. 4C) and *phzR* (Fig. 4D) genes in the PCA-producing *Pseudomonas* strains *P. fluorescens* 2-79 and *P. aureofaciens* 30-84. Homology with other LuxI and LuxR homologues in other *Pseudomonas* species and other bacterial species was much lower (20 to 40%).

### Influence of exogenous autoinducers on the expression of the phzI, phzR genes, and the biosynthetic operon

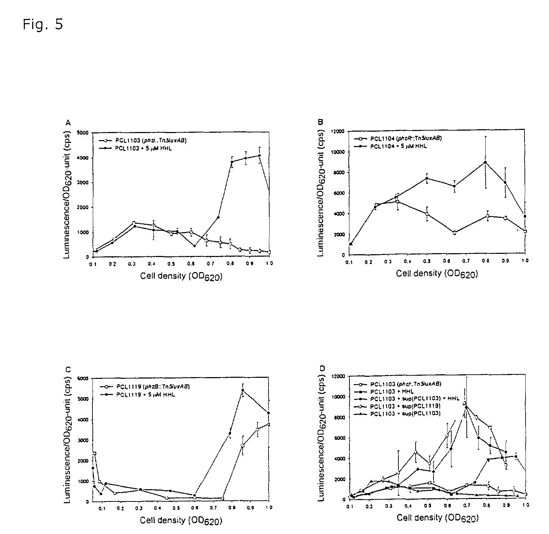

Previously, a number of biosynthetic mutants had been identified, of which mutant PCL1119 contains a promotorless *luxAB* reporter in the *phzB* gene and was used for expression studies in the tomato rhizosphere (Chin-A-Woeng et al. 1998). This strain was used to quantify the expression of the PCN biosynthetic operon during growth in liquid cultures. Since the promoterless *luxAB* genes inserted in the same orientation as the direction of transcription of the *phzI* and *phzR* genes mutated in PCL1103 (*phzI*::Tn*5luxAB*) and PCL1104 (*phzR*::Tn*5luxAB*), these strains were also used to quantify the expression of these genes. Expression of the *phzI* gene in mutant PCL1103 remained at a basal level during growth, indicating that inducing activity is absent without a functional *phzI.* Addition of synthetic HHL or spent growth medium of an overnight culture of PCL1391 to a low density (OD₆₂₀ 0.1) cell culture of PCL1103 resulted in an induction of *phzI* expression once the cell culture has grown to an OD₆₂₀ of 0.6 or more (Fig. 5A). Expression of *phzR* in mutant PCL1104 was constitutive both in the presence of exogenous HHL and in the absence of endogenous autoinducers (Fig. 58). Expression of the PCN biosynthesis gene cluster (*phzB*::Tn*5luxAB*) in PCL1119 was greatly increased in the late exponential/early stationary phase and the moment of induction could be advanced by addition of synthetic HHL (Fig. 5C) but not by other synthetic *N*-AHLs.

Addition of cell-free spent culture medium of the *N*-AHL-producing strain PCL1119 (*phzB*::Tn*5luxAB*) to a fresh culture of strain PCL1103 (*phzI*::Tn*5luxAB*) led to a much earlier and larger induction of the *phzI* gene than addition of synthetic HHL. Although addition of spent culture medium of an overnight culture of strain PCL1103 as such did not induce the *phzI* gene, a synergistic effect was observed when it was added together with HHL. Induction of expression in the presence of culture supernatant of strain PCL1103 was already in mid-exponential phase growth (OD₆₂₀ 0.35), much earlier than in the presence of HHL only (Fig. 5D). Combinations of autoinducers produced by strain PCL1391 were tested for their possible synergistic effect on expression. None of the combinations BHL/HHL, HHL/OHL, or BHL/HHL/OHL resulted in a different level or point of onset of induction than that observed after addition of HHL only (data not shown).

### Analysis of mutants in a gacS homologue

Toluene extracts of culture supernatants of strain PCL1123 (*gacS*::Tn*5luxAB*) did not contain PCN as judged after TLC and HPLC separations. The production of autoinducer in this strain was greatly reduced compared with that in the wild-type as judged from TLC analysis of extracts of cell-free growth supernatant of three-day old cultures (Fig. 3, lane 4). PCN production could not be restored by the addition of spent growth medium of PCL1119 (*phzB*::Tn*5luxAB*) or of synthetic HHL (data not shown). Strain PCL1123 (*gacS*::Tn*5luxAB*) was not altered in the production of HCN but lacked protease and chitinase production (Table 2). The mutant was not impaired in motility or ability to colonise the tomato rhizosphere in competition with a *lacZ-*tagged derivative of the wild type strain (data not shown). Like strains PCL1103 (*phzI*::Tn*5luxAB*) and PCL1104 (*phzR*::Tn*5luxAB*), PCL1123 was not able to inhibit growth of *F. oxysporum* f.sp. *radicis-lycopersici* in an vitro antifungal assay (data not shown).

The part of the nucleotide sequence flanking the transposon in strain PCL1123 that was analysed has a total length of 999 bp and is 90% identical to the sequence of the *gacS* (formerly known as *lemA)* gene of *P. fluorescens* (Whistler et al. 1998) and has 84% identity with the *gacS* gene of *P. syringae* (Rich et al. 1994).

A *gacS* mutant independently constructed by homologous recombination using a pIC20R suicide construct containing a tetracycline resistance cassette and a PCR fragment of an internal fragment of the *gacS* homologous gene (pMP6014) yielded mutants with the same phenotype as PCL1123, confirming that the phenotype observed in strain PCL1123 was due to the transposon insertion in *gacS.*

The *gacS* mutant was complemented for production of PCN, protease, and chitinase after introduction of pEMH97, a pLAFR3 derivative containing the *lemA* gene of *P. syringae* (Hrabak and Willis 1992). Introduction of the pEMH97 construct into the *phzI* mutant PCL1104 and the *phzR* mutant PCL1104 did not restore PCN production and neither did introduction of pMP6008, containing the *phzI* and the *phzR* genes, restore PCN production in the *gacS* mutant.

### Influence of a gacS mutation on phzI, phzR, and phzB mutants

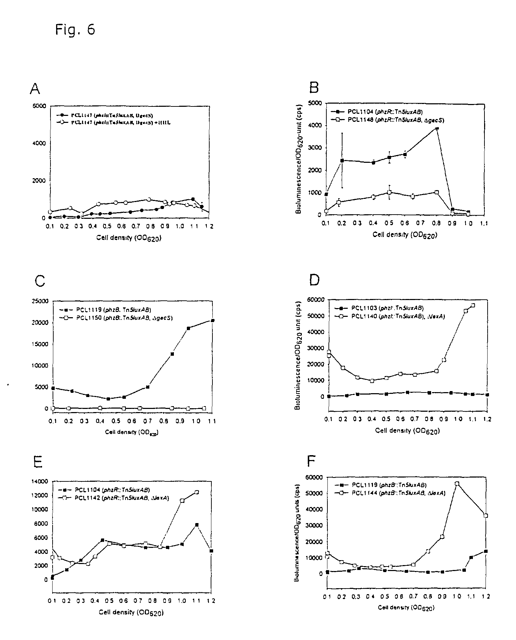

To analyse the effect of a *gacS* mutation on the expression of *phzI, phzR,* and *phzB,* a mutation in the *gacS* homologous gene was introduced in the reporter strains PCL1103 (*phzI*::Tn*5luxAB*), PCL1104 (*phzR*::Tn*5luxAB*), and PCL1119 (*phzB*::Tn*5luxAB*) using homologous recombination. Analyses of the *luxAB* expression in these strains showed that the response characteristic for a quorum sensing regulation mechanism is abolished by an additional *gacS* mutation (Fig. 6A, B, and C). Whereas *phzI* in PCL1103 (*phzI*::Tn*5luxAB*) is responsive to added synthetic HHL, *phzI* in the double mutant PCL1147 (*phzI*::Tn*5luxAB*, *ΔgacS*) is not induced by the addition of autoinducer (Fig. 6A). The basal level of expression of the *phzR* gene is reduced with an additional defective *gacS* gene (Fig. 6B). The expression of the biosynthetic *phzB* gene is completely abolished in a *gacS* background (Fig. 6C) as was the PCN production of the *gacS* mutant PCL1123 (data not shown).

### Characterisation of the PCN-overproducing lexA mutant

The mutation of *lexA* in PCL1111 resulted in a more than tenfold overproduction of PCN (Table 2 and unpublished results). An increased production of autoinducer was observed as judged from the increased intensity of the spot for HHL and the clear presence of BHL, which is normally only detected when larger amounts of sample are analysed on TLC. This apparent overproduction of autoinducer is consistent with higher PCN expression levels in the *lexA* mutant. No alterations in production of HCN, protease, and chitinase were detected in the *lexA* mutant strain. The mutant was not impaired in motility or ability to colonise the tomato root system as assayed in competition with a *lacZ-*tagged derivative of the wild type strain PCL1391 (data not shown).

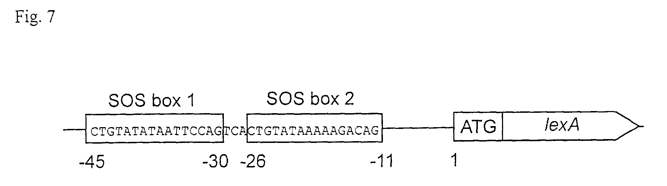

Analysis of 1.5 kb of the nucleotide sequence flanking the transposon in mutant PCL1111 revealed a transposon insertion in a gene homologous with the *lexA* genes of *P. aeruginosa* (90%), *P. putida (87%)* (Garriga et al. 1992), and *E. coli* (41%) (Brent and Ptashne 1981; Little et al. 1981; Calero et al. 1993). In the promoter region of the *lexA* homologue two putative LexA repressor binding sites starting at relative nucleotide positions -26 (5'-CTGTATAAAAAGACAG-3') and -45 (5'-CTGTATATAATTCCAG-3') were identified, the distance between them being 3 bp (Fig. 7).

An independently constructed *lexA* mutant made by homologous recombination using a pIC20R suicide construct containing a tetracycline resistance cassette and a PCR fragment of a part of the *lexA* gene (pMP6015) yielded a mutant with the same phenotype as PCL1111 (*lexA*::Tn*5luxAB*). The overproduction of PCN was also observed in this independent mutant confirming that the phenotype observed in PCL1111 is due to the transposon insertion in *lexA.*

### Influence of a lexA mutation on phzl, phzR, phzB, and gacS genes

A *lexA* mutation was made in PCL1103, PCL1104, PCL1119, and PCL1123 by homologous recombination using pMP6015. Surprisingly, introduction of a *lexA* mutation in the *phzI* or *phzR* mutant strains PCL1103 and PCL1104 restores PCN pigment production in these strains to almost wild-type levels. This was demonstrated on HPLC fractionation of culture supernatant extracts (data not shown) and observations of colonies on agar plates (data not shown). Expression of *phzI* and *phzB* in a *lexA* mutant was determined using the Tn*5luxAB* reporters (Fig. 6D, F). Surprisingly, *phzI*::Tn*5luxAB* in PCL1140 (Δ*lexA*, *phzI*::Tn*5luxAB*) was induced at the start of the stationary phase, even in the absence of autoinducers (Fig. 6D). The basic level of expression of *phzI,* and consequently of *phzB* (Fig. 6F), was higher than that of the parental strain PCL1103. A small positive effect was observed on the expression of *phzR*::Tn*5luxAB* of the *lexA* mutation (Fig. 6E). An additional *lexA* mutation in the *gacS* mutant PCL1123 (PCL1162) did not restore PCN production as observed for *phzI* and *phzR* mutants and resulted in the same phenotype as PCL1160 (*lexA*::Tn*5luxAB*, Δ*gacS*).

Although the effect of a *gacS* mutation on the expression of *lexA* strain PCL1160 could not be determined by measuring luminescence due to the incorrect insertion of the reporter genes, the *lexA/gacA* double mutant did not produce PCN as demonstrated on TLC analysis of extracts of spent culture medium.

### Influence of root exudate components on expression of the PCN biosynthetic operon

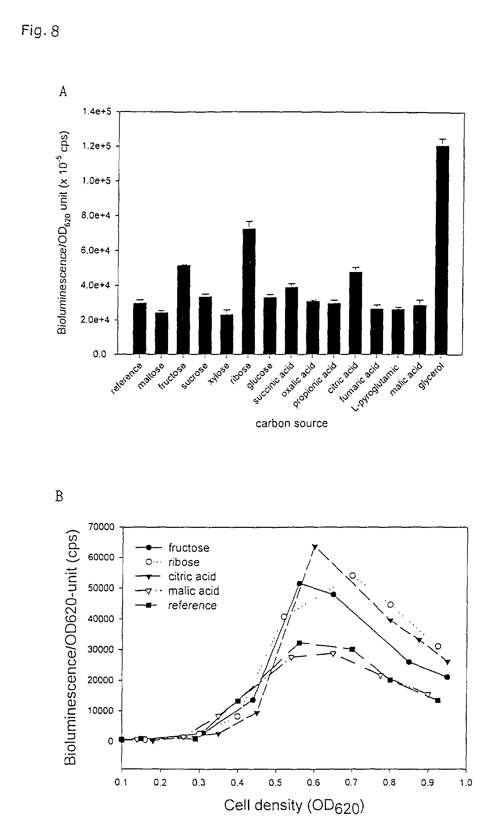

Strain PCL1119 (*phzB*: :Tn*5luxAB*) is a derivative of strain PCL1391 in which a promoterless Tn*5luxAB* transposon is inserted into the *phzB* gene. This bioluminescent reporter strain can be used to analyze the expression of the PCN biosynthetic operon (Chin-A-Woeng et al. 1998). The influence of the tomato (*Lycopersicon esculentum* Mill. cv. Carmello) root exudate components malic acid, L-pyroglutamic acid, fumaric acid, citric acid, propionic acid, oxalic acid, succinic acid, glucose, ribose, xylose, sucrose, fructose, and maltose on expression of the PCN biosynthetic operon was tested. Most of the tested single root exudate components had no significant effect (FIG.8A) on the expression of *phzB,* neither on the point of onset of induction (data not shown). However, the presence of fructose, ribose, or citric acid appeared to increase the expression of the PCN biosynthetic operon significantly compared with the control (FIG.8A). Glycerol, the presence of which in root exudate had not been demonstrated, appeared to be the carbon source that caused the largest increase in expression. The effect of these carbon sources was followed further as a function of growth(FIG.8B). The control medium and medium to which malic acid was added were used as controls. The results indicate that expression was highest at the end of the logarithmic growth phase and during stationary phase. A clear increase in expression was observed for fructose, ribose, and citric acid when compared with malic acid or the control medium.

### Influence of metal ions on expression of the PCN biosynthetic operon

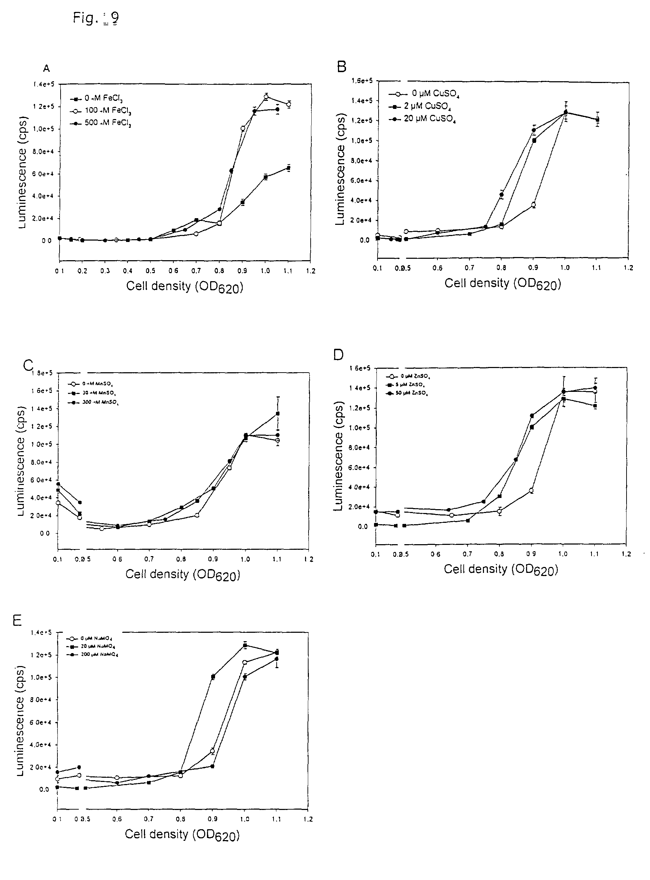

To test the effect of limitation or a tenfold or hundredfold increased concentration of Zn²⁺, Cu²⁺, Mn²⁺, MoO4⁻, and Fe³⁺ on the expression of the PCN biosynthetic operon in Vogel-Bonner medium these ions were omitted or added in a ten- or hundredfold concentration in Vogel-Bonner medium (FIG.9). The absence of Cu²⁺(FIG.9B), Zn²⁺(FIG.9D), or MoO4⁻ (FIG.9E) delayed expression of *phzB* whereas Fe³⁺ limitation resulted in an apparent delay and lower expression(FIG.9A) No influence of omission of Mn²⁺ was detected (FIG.9C).Excess of Fe³⁺ (FIG.9A), Cu²⁺ (FIG.9B), Zn²⁺ (FIG.(9D), or MoO4⁻ (FIG.9E) had no significant effect. Surprisingly, excess of molybdate, like limitation for this ion, supressed expression of *phzB.*

### Influence of low oxygen tension on expression of the PCN biosynthetic operon

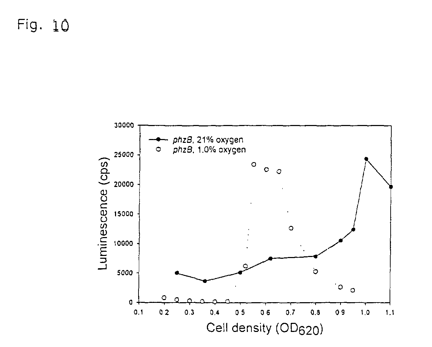

Creating micro-aerobic conditions by growing cultures of the wild-type *P. chlororaphis* strain PCL1391 without shaking resulted in higher production of PCN as was shown on HPLC fractionation of extracts of culture supernatants (data not shown). The expression pattern of the PCN biosynthetic operon under oxygen limiting conditions was determined in a closed system in which cells of strain PCL1119 were grown under aeration with 1.0% oxygen and 99% nitrogen. Indeed, under low oxygen conditions *phzB* expression was induced much earlier in the growth curve than the reference culture grown under aeration of air(FIG.10)

**Table 1.**

| Microorganisms and plasmids | | |
|---|---|---|
| Strains and plasmids | Relevant characteristics | Reference or source |
| *Bacterial strains* | | |
| PCL1391 | Wild type *Pseudomonas chlororaphis,* producing phenazine-1-carboxamide and biocontrol strain of tomato foot and root rot caused by *F. oxysporum* f.sp. *radicis-lycopersici* | Chin-A-Woeng et al., 1998 |
| PCL1119 | PCL1391 derivative in which a promoterless Tn*5luxAB* has been inserted in *phzB* | Chin-A-Woeng et al., 1998 |
| PCL1103 | PCL1391 derivative in which a promoterless Tn*5luxAB* has been inserted in *phzl* | This study |
| PCL1104 | PCL1391 derivative in which a promoterless Tn*5luxAB* has been inserted in *phzR* | This study |
| PCL1111 | PCL1391 derivative in which a promoterless Tn*5luxAB* has been inserted in a *lexA* homologue | This study |
| PCL1123 | PCL1391 derivative in which a promoterless Tn*5luxAB* has been inserted in a *gacS* homologue | This study |
| PCL1140 | PCL1103 derivative, *ΔlexA phzl*::Tn*5luxAB* | This study |
| PCL1142 | PCL1104 derivative, *ΔlexA phzR*::Tn*5luxAB* | This study |
| PCL1144 | PCL1119 derivative, *ΔlexA phzB::*Tn*5luxAB* | This study |
| PCL1146 | PCL1103 derivative, *ΔgacS phzl*::Tn*5luxAB* | This study |
| PCL1148 | PCL1104 derivative, Δ*gacS phzR*::Tn*5luxAB* | This study |
| PCL1150 | PCL1119 derivative, *ΔgacS phzB*::Tn*5luxAB* | This study |
| PCL1160 | PCL1123 derivative, *ΔlexA gacS*::Tn*5luxAB* | This study |
| PCL1162 | PCL1111 derivative, *ΔgacS lexA*::Tn*5luxAB* | This study |
| DH5α | General purpose *E*. *coli* host strain | Boyer and Roulland-Dussoix 1969 |
| CV026 | *Chromobacterium violaceum N*-AHL reporter strain | Milton et al., 1997 |
| NT1 | *Agrobacterium tumefaciens* NT1 *N*-AHL reporter strain harbouring pJM749 containing a *lacZ* reporter fused to a *tra* gene of which expression is dependent on TraR. | Piper et al., 1993 |
| | | |

| *Fungi* | | |
|---|---|---|
| *Fusarium oxysporum* f. sp. *radicis-lycopersici* strain ZUM2407 | Cause of crown and root rot of tomato | IPO-DLO, Wageningen, The Netherlands |

| *Plasmids* | | |
|---|---|---|
| pRL1063a | Plasmid harbouring Tn5 transposon containing promoterless *luxAB* | Wolk et al., 1991 |
| pMP6003 | pRL1063a-based plasmid recovered from chromosomal DNA of PCL1103 after digestion with *Eco*RI | This study |
| pMP6004 | pRL1063a-based plasmid recovered from chromosomal DNA of PCL1104 after digestion with *Eco*RI | This study |
| pMP6005 | pRL1063a-based plasmid recovered from chromosomal DNA of PCL1111 after digestion with *Eco*RI | This study |
| pMP6006 | pRL1063a-based plasmid recovered from chromosomal DNA of PCL1123 after digestion with *Eco*RI | this study |
| pMP6007 | pBluescript containing a 4.5 kb chromosomal fragment of strain PCL1391 with the *phzI, phzR* genes and first part of the *phzA* gene. | This study |
| pMP6008 | pME6010 containing a 4.5 kb chromosomal fragment of strain PCL1391 with the *phzI, phzR* genes and first part of the *phzA* gene. | This study |
| pMP6013 | plC20R containing a 0.3 kb PCR fragment of the *gacS* gene and a tetracycline cassette from pMP5000 | This study |
| pSB401 | Autoinducer reporter construct based upon the *Photobacterium* bioluminescence (*lux*) system | Winson et al., 1998 |
| pSB1142 | Autoinducer reporter construct based upon the *P. aeruginosa* elastase (*las*) system | T. Perehinec, Division of Food Sciences, Univ. of Nottingham, pers. comm. |
| pEMH97 | pLAFR3 harbouring the *gacS* gene of *P. syringae* | Willis et al., 1990(Willis et al. 1990) |
| pME6010 | *E. colil Pseudomonas* shuttle vector, stably maintained in *Pseudomonas* species | Heeb et al., 2000 |
| pMP6014 | plC20R with a KpnI/EcoRI 0.3 kb internal PCR fragment of *gacS* and a tetracycline marker from pMP5000 inserted in the multicloning site | This study |
| pMP6015 | plC20R with a *Kpn*I/*Eco*RI 0.3 kb internal PCR fragment of *lexA* and a tetracycline marker from pMP5000 inserted in the multicloning site | This study |

**Table 2.**

| Characteristics of *P. chlororaphis* PCL1391 transposon derivatives | | | | | |
|---|---|---|---|---|---|
| Traits | Bacterial strains PCL1391 | PCL1103 | PCL1104 | PCL1123 | PCL1111 |
| Mutated gene | none | *phzI* | *phzR* | *gacS* | *lexA* |
| PCN production | + | - | - | - | ++++ |
| Antifungal activity^{y} | + | - | - | - | + |
| Autoinducer production | + | - | - | - | ++ |
| HCN production | + | + | + | + | + |
| Protease production | + | + | + | - | + |
| Chitinase production | + | + | + | - | + |
| Motility | + | + | + | + | + |
| Tomato root tip colonisation² | + | + | + | + | + |

| | | | | | |
|---|---|---|---|---|---|
| ^{y}Activity was tested in a Petri dish assay for antifungal activity (Geels and Schippers 1983b) against *F. oxysporum* f.sp. *radicis-lycopersici* | | | | | |
| ^{z}Colonising ability was tested after seedling inoculation in competition with PCL1392, a "good-colonising" Tn*5lacZ* tagged derivative of PCL1391 not impaired in root colonisation, in a gnotobiotic sand system (Simons et al. 1996). +, wild-type level; +++++, tenfold increase;-, absent | | | | | |

### Legends to figures

Fig. 1. C18-reverse phase TLC analysis of *N*-acyl-L-homoserine lactones produced by *Pseudomonas chlororaphis* strain PCL1391 visualised using the *Chromobacterium violaceum* reporter assay. Lane 1: synthetic BHL standard; lane 2: synthetic HHL standard; lane 3: synthetic OHL standard; lane 4: Autoinducer profile of strain PCL1391. It should be noted that the major spot visible in lane 4 moved to exactly the same position as HHL when smaller amount of sample were applied.

Fig. 2. Structural identification of the major compound with autoinducer activity produced by *Pseudomonas chlororaphis* PCL1391 by mass spectrometry. Panel A. CID spectrum obtained from a 1.3 ng/µl standard solution of HHL. Insert: fragmentation scheme for HHL. Panel B. CID spectrum obtained from fraction with R_{f} 0.4 after HPLC purification.

Fig. 3. C18-reverse phase TLC analysis of *N*-acyl-L-homoserine lactones produced by *Pseudomonas chlororaphis* strain PCL1391 and derivatives. Autoinducer profile of Tn*5* mutants of *Pseudomonas chlororaphis* strain PCL1391. Lane 1: PCL1391 wild type; lane 2: PCL1103 (*phzI*::Tn*5luxAB*); lane 3: PCL1104 (*phzR*::Tn*5luxAB*); lane 4: PCL1123 (*gacS*::Tn*5luxAB*); lane 5: PCL1111 (*lexA*::Tn*5luxAB*); lane 6: PCL1119 (*phzB*::Tn*5luxAB*); lane 7: synthetic HHL standard. A volume of 100 ml of three-day old KB culture supernatant of the strains was extracted with dichloromethane and tested in the *Chromobacterium* TLC overlay assay (See Experimental procedures).

Fig. 4. Chromosomal localisation, regulatory elements, and homology of genes regulating PCN production in *P. chororaphis* PCL1391. Panel A. Genetic analysis of mutants altered in PCN production of *Pseudomonas chlororaphis* strain PCL1391. Positions of the Tn*5luxAB* transposon of strains PCL1103, PCL1104, and PCL119 are indicated with arrows. In addition, the first two genes of the biosynthetic operon, *phzA* and *phzB* are shown. Sequences homologous to *lux*-boxes of *Photobacterium fisheri* were identified in the promoter region of the *phzI* and *phzA* genes. Panel B. Identification of sequences homologous to the *P. fisheri lux*-box in the *phzI* and *phzA* promoter regions. The *lux-*box is double underlined and the ATG start codons of *phzI* and *phzA* are indicated. Panel C. Tree of homology of the Phzl proteins of strain *P. aureofaciens* 30-84 (*P. aur*. Phzl), *P. fluorescens* 2-79 (*P. flu.* Phzl), *P. aeruginosa* PAO1 (*P. aer.* Phzl, Vsml, Rhll, Lasl), *P. syringae* pv. *syringae* (*P. syr*. Ahll), *P. fisheri* (*P. fis.* Luxl), *E. carotovora* (*E. car.* Expl, Carl), *A. tumefaciens (A. tum.* Tral), and *Rhizobium etli* (*R*. *etl*. Rail). Panel D. Tree of homology of the PhzR proteins of *P. aureofaciens* 30-84 *(P. aur*. PhzR), *P. fluorescens* 2-79 (*P. flu.* PhzR), *P. aeruginosa* PAO1 *(P. aer*. PhzR, VsmR, RhlR, LasR), *P. fisheri* (*P*. *fis.* LuxR), *E. carotovora* (*E. car.* ExpR), *A. tumefaciens* (*A*. *tum.* TraR), and *Rhizobium etli (R. etl*. RaiR).

Fig. 5. Expression studies of the *phzl* gene, *phzR* gene, and the PCN biosynthetic operon of *Pseudomonas chlororaphis* strain PCL1391. Strains were grown in LB medium. HHL was added at the initial optical density (OD₆₂₀) of 0.1. Values depicted in the panels are values for the luminescence measured in counts per seconds (cps) per cell density unit during growth in time. Panel A. Induction of *phzI* in strain PCL1103 (*phzI*::Tn*5luxAB*) in the absence and presence of 5 µM synthetic HHL. Panel B. Quantification of *phzR* expression in the absence and presence of 5 µM synthetic HHL using strain PCL1104 (*phzR*::Tn*5luxAB*). Panel C. Expression of the PCN biosynthetic operon of strain PCL1119 (*phzR*::Tn*5luxAB*) in the absence and presence of 5 µM synthetic HHL. Panel D. Induction of *phzI by* synthetic HHL, by cell-free spent culture supernatant of strain PCL1103, by spent growth supernatant of strain PCL1119, and by a combination of spent growth supernatant of PCL1103 and HHL.

Fig. 6. Expression of the *phzl* gene, *phzR* gene, and the PCN biosynthetic operon of strain *Pseudomonas chlororaphis* PCL1391 in *lexA* and *gacS* mutant strains. Panels A-C. Expression studies of the *phzI, phzR,* and PCN biosynthetic genes in a *gacS*-deficient background using the *phzI*::Tn*5luxAB* (PCL1103), *phzR*::Tn*5luxAB* (PCL1104), and *phzB*::Tn*5luxAB* (PCL1119) reporters, respectively. Panels D-F. Expression of the *phzI*, *phzR,* and biosynthetic genes in a *lexA*-deficient background using the *phzI*::Tn*5luxAB* (PCL1103), *phzR*::Tn*5luxAB* (PCL1104), and *phzB*::Tn*5luxAB* (PCL1119) reporters, respectively. Bioluminescence was measured as described in the legend of Fig. 5.

Fig. 7. Identification of sequences homologous to the binding sites for LexA (SOS boxes) in the promoter region of *lexA* in *Pseudomonas chlororaphis* strain PCL1391.

FIG.8, Influence of root exudate components on expression of the PCN biosynthetic operon of *Pseudomonas chlororaphis. P. chlororaphis* strain PCL1119 (*phzB*::Tn*5luxAB*) was grown in modified Vogel-Bonner medium in which the indicated carbon sources were present. Panel A shows the maximal expression of the PCN biosynthetic operon. Panel B shows the expression of the PCN biosynthetic operon during growth in a selection of carbon and organic acids that show a clear elevation in expression as shown in panel A. Bioluminescence was detected as described in Materials and Methods.

FIG.9. Influence of limited and excessive amounts of metal ions in the growth medium on the expression of the PCN biosynthetic operon. *Pseudomonas chlororaphis* strain PCL1119 *(phzB*::Tn*5luxAB*) was grown in modified Vogel-Bonner medium as described in Materials and Methods. The middle concentration is the standard concentration in Vogel-Bonner medium. Selected metal ions were omitted or added in a tenfold or hundredfold increased concentration. Bioluminescence was detected as described in Materials and Methods.

FIG.10.Effect of low oxygen tensions on *phzB* expression. *Pseudomonas chlororaphis* PCL1119 (*phzB*::Tn*5luxAB*) was grown under 21% (air) or 1.0% oxygen conditions. Bioluminescence was detected as described in Materials and Methods.

### Annex to the application documents - subsequently filed sequences listing

## Claims

1. Mineral wool plant substrate comprising a coherent matrix of mineral wool and bound to the matrix a biologically active additive or a microorganism producing said additive, which additive has a favourable effect on plants.

2. Substrate according to claim 1, wherein the biologically active additive is selected from the group consisting of antibiotics, plant growth promoters, and mixtures thereof.

3. Substrate according to claim 2, wherein the biologically active additive is a fungicide.

4. Substrate according to claim 3, wherein the fungicide is a phenazine derivative having fungicidal activity.

5. Substrate according to claim 4, wherein the fungicide is phenazine-1-carboxamide.

6. Substrate according to claim 1, wherein the microorganism producing the additive is an antibiotic producing bacterium.

7. Substrate according to claim 6, wherein the bacterium is genetically modified such that it comprises multiple copies of genes *phzR* and *phzI* resulting in an overproduction of antibiotic.

8. Substrate according to claim 6 or 7, wherein the antibiotic is a fungicide.

9. Substrate according to claim 8, wherein the antibiotic is a phenazine derivative having fungicidal activity.

10. Substrate according to claim 9, wherein the bacterium comprises *Pseudomonas chlororaphis* PCL1391 which produces phenazine-1-carboxamide.

11. Substrate according to claim 10, wherein the bacterium comprises a genetically transformed *Pseudomonas chlororaphis* PCL1391 having a mutation in the *lexA* gene resulting in an overproduction of phenazine-1-carboxamide.

12. Use of a substrate as defined in any of claims 6-11 in the growth of crops, wherein the production of the antibiotic is increased by employing one or more of the following conditions:
- growth under low oxygen,
- the presence of glycerol, fructose, ribose or citric acid in the nutrient medium, and
- the presence of various minerals (Cu²⁺, Zn²⁺, Fe³⁺) in the nutrient medium.

13. A process for producing a mineral wool plant substrate as defined in any of claims 1-11, wherein the additive or the microorganism producing said additive is admixed to mineral wool fibres and a curable binder to form a mixture, and said mixture is cured to form a coherent matrix.
